# EUROPÄISCHE PATENTSCHRIFT

(11) **EP 3 597 707 B1**
(45) Veröffentlichungstag und Bekanntmachung des Hinweises auf die Patenterteilung: **06.10.2021**
(21) Anmeldenummer: 18184383.0
(22) Anmeldetag: 19.07.2018
(51) Int. Cl.: C09D 5/00

(54) **FORMULIERUNG ZUM APPLIZIEREN AUF GLAS, PORZELLAN, FLIESEN, METALLEN UND KUNSTSTOFFFOLIEN**
FORMULATION FOR APPLYING ON GLASS, PORCELAIN, TILES, METALS AND PLASTIC FILMS
FORMULATION DESTINÉE À ÊTRE APPLIQUÉE SUR LE VERRE, LA PORCELAINE, LES CARREAUX, LES MÉTAUX ET LES FEUILLES EN MATIÈRE PLASTIQUE

(43) Veröffentlichungstag der Anmeldung: 22.01.2020
(73) Patentinhaber: Heraeus Deutschland GmbH & Co. KG, 63450 Hanau (DE)
(72) Erfinder: BOLDT, Kai-Ulrich, 63450 Hanau (DE); KRÄMER, Peter, 63674 Altenstadt (DE); BEHL, Susanne, 63776 Mömbris-Königshofen (DE)
(74) Vertreter: Heraeus IP

(56) Entgegenhaltungen:
- WO-A1-2015/192248
- WO-A1-2018/146617
- KR-A- 20140 098 922

## Beschreibung

Die Erfindung betrifft eine Zusammensetzung beinhaltend mindestens folgende zwei Komponenten, a) ein Silbercarboxylat; und b) ein Terpen wobei die Zusammensetzung als weitere Komponente mindestens eine Carbonsäure beinhaltet., eine Tinte für den Tintenstrahldruck und eine Paste zum Drucken in einem Siebdruckverfahren, wobei die Tinte beziehungsweise die Paste jeweils die erfindungsgemäße Zusammensetzung beinhaltet. Die Erfindung betrifft auch ein Verfahren zum Herstellen eines Musters auf einem Substrat, mindestens beinhaltend folgende Schritte: A) Bereitstellen eines Substrats und einer Zusammensetzung beinhaltend mindestens ein Silbercarboxylat,ein Terpen und als weitere Komponente mindestens eine Carbonsäure; B) Aufbringen der Zusammensetzung auf dem Substrat unter Erhalt eines Vorläufer mit dem Muster; C) Behandeln des Vorläufers mit dem Muster gemäß einem Behandlungsschritt ausgewählt aus der Gruppe bestehend aus: a) bei einer Temperatur von mehr als 200°C für mindestens 10 Minuten, wobei das Behandeln bevorzugt in einer Atmosphäre von Luft erfolgt; b) einer photonischen Sinterung, c) einer Kombination von a) und b),wobei das Substrat erhalten wird, auf dem das Muster aufgebracht ist. Die Erfindung betrifft ferner einen Drucker, einen zumindest zum Teil beschichteten Gegenstand und eine Verwendung der erfindungsgemäßen Zusammensetzung zum Aufbringen eines Musters.

### Hintergrund der Erfindung

Die Verwendung von metallhaltigen flüssigen bis pastösen Zusammensetzung zur Herstellung von metallischen Farbtönen oder elektrisch leitenden Strukturen auf Oberflächen ist bekannt. Ihre Anwendung ist vielfältig, einschließlich dem Beschichten von Geschirr, Flachglas, Kunststoff, Kunstharzgegenständen, Hohlglas, Fliesen, Sanitärobjekten, Einrichtungsgegenständen, sowie der Herstellung von Leiterbahnen, Schaltkreisen und ähnlichem. Es gab eine Reihe von Versuchen, solche Zusammensetzungen zu verbessern bezüglich einer Optimierung der Herstellkosten, der Farbtöne, des Glanzes, der Leitfähigkeit, der Lagerstabilität, als auch bezüglich der Anwendbarkeit auf verschiedene Oberflächen betrifft.

Im Stand der Technik wurden mehrere Versuche unternommen, silberfarbene Edelmetallpräparate anzubieten. Üblicherweise enthalten diese neben Silber in der Regel weitere Edelmetallkomponenten oder Halbedelmetallkomponenten oder von beiden, wie zum Beispiel mindestens ein Komponente basierend auf Kupfer, Wolfram oder Vanadium, oder einer Kombination von zwei oder mehr davon. Einige der silberfarbenen Edelmetallpräparate enthalten auch gar kein Silber, sondern basieren auf einem Gemisch aus Gold- und Platinverbindungen oder Gold- und Palladiumverbindungen. Der Einsatz dieser vergleichsweise teuren Rohstoffe schlägt sich im Preis der damit hergestellten silberfarbenen Edelmetallpräparate nieder, verbunden mit dem Nachteil, dass die elektrische Leitfähigkeit immer hinter der maximal möglichen elektrischen Leitfähigkeit einer ausschließlich auf Silber basierenden Zusammensetzung zurückbleibt.

Aus WO 2018146617 A1 sind molekulare Tinten bekannt, die Silbercarboxylat, ein Lösungsmittel und ein Polymerbinder enthalten.

Aus WO 2015/192248 A1 sind molekulare Tinten bekannt, die C₈-C₁₂ Silbercarboxylat oder ein Kupfersalz, ein Lösungsmittel und einen Polymerbinder enthalten.

Aus KR20140098922A sind Tinten bekannt, die sowohl lösliche Silbersalze als auch Silbernanopartikel enthalten.

Nach wie vor besteht beim Stand der Technik Bedarf an verbesserten Lacken, insbesondere an silberhaltigen flüssigen bis pastösen Zusammensetzungen. Weiterhin besteht Bedarf, die Ressourcen an den vergleichsweise seltener vorkommenden Edelmetallen Gold, Palladium und Platin zu schonen. Insbesondere besteht Bedarf an kostengünstigen silberhaltigen, applizierbaren Zusammensetzungen, die zur Herstellung glänzender Edelmetallschichten und leitfähiger Strukturen eingesetzt werden können.

### Aufgaben

Eine Aufgabe der vorliegenden Erfindung ist es, einen oder mehrere der sich aus dem Stand der Technik ergebenden Nachteile zumindest teilweise zu überwinden.

Es ist eine Aufgabe der Erfindung, eine Zusammensetzung mit möglichst geringem Silbergehalt in Verbindung mit einer vergleichsweise hohen Leitfähigkeit bereitzustellen.

Es ist eine weitere Aufgabe der Erfindung, eine Silber enthaltende Zusammensetzung bereitzustellen, die möglichst wenig von Silber verschiedene Metallkomponenten, insbesondere möglichst wenig andere Edelmetallkomponenten, und vor allem kein Gold enthält.

Es ist eine Aufgabe der Erfindung, eine Silber enthaltende Zusammensetzung bereitzustellen, die gut lagerfähig und flexibel einsetzbar ist.

Es ist eine weitere Aufgabe der Erfindung, ein Verfahren anzugeben mit dem eine silberhaltige Zusammensetzung mittels eines Tintenstrahldruckverfahrens auf ein Substrat aufgebracht werden kann.

Es ist eine weitere Aufgabe der Erfindung, ein Verfahren anzugeben mit dem eine silberhaltige Zusammensetzung mittels eines Siebdruckverfahrens auf ein Substrat aufgebracht werden kann.

Es ist eine weitere Aufgabe der Erfindung, ein Verfahren anzugeben mit dem eine elektrisch leitende Struktur mit einer hohen elektrischen Leitfähigkeit auf ein Substrat aufgebracht werden kann.

Es ist eine weitere Aufgabe der Erfindung, ein Verfahren anzugeben mit dem ein metallisch glänzendes Muster mit einem hohen Glanz auf ein Substrat aufgebracht werden kann.

Es ist eine weitere Aufgabe der Erfindung, ein kostengünstiges Verfahren anzugeben mit dem eine silberhaltige Beschichtung auf ein Substrat aufgebracht werden kann und die Beschichtung eine gute elektrische Leitfähigkeit aufweist.

Es ist eine weitere Aufgabe der Erfindung, ein kostengünstiges Verfahren anzugeben mit dem eine silberhaltige Beschichtung auf ein Substrat aufgebracht werden kann und die aufzubringende Formulierung eine gute Lagerstabilität aufweist.

Es ist eine weitere Aufgabe der Erfindung, ein kostengünstiges Verfahren anzugeben mit dem eine silberhaltige Beschichtung auf ein Substrat aufgebracht werden kann und die Beschichtung einen hohen metallischen Glanz aufweist.

Es ist eine weitere Aufgabe der Erfindung, einen Gegenstand bereitzustellen, der eine elektrisch leitfähige Beschichtung aufweist.

Es ist eine weitere Aufgabe der Erfindung, einen Gegenstand bereitzustellen, der eine elektrisch leitfähige Beschichtung mit einem möglichst geringen Silbergehalt aufweist.

Es ist eine weitere Aufgabe der Erfindung, einen Gegenstand bereitzustellen, der ein Muster mit einem hohen, metallischen Glanz aufweist.

Es ist eine weitere Aufgabe der Erfindung, einen Gegenstand bereitzustellen, der ein haltbares Muster mit einem hohen, metallischen Glanz aufweist.

### Bevorzugte Ausführungsformen der Erfindung

Ein Beitrag zur mindestens teilweisen Erfüllung mindestens einer der zuvor genannten Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen.
|1| Eine Zusammensetzung beinhaltend mindestens die Komponenten
   (I) Silbercarboxylat; und
   (II) ein Terpen
   (III) wobei die Zusammensetzung als weitere Komponente mindestens eine Carbonsäure beinhaltet.
   Die Summe der Gewichtsanteile aller Komponenten der erfindungsgemäßen Zusammensetzung ergibt stets 100 Gew.-%. Bevorzugt weist die erfindungsgemäße Zusammensetzung als weitere Komponenten zum Beispiel ein oder mehrere organische Lösemittel, Haftvermittler, Viskositätshilfsmittel, und Additive, oder eine Kombination von zwei oder mehr davon, auf.
|2| Die Zusammensetzung nach Ausführungsform 1, wobei das Terpen ausgewählt ist aus der Gruppe bestehend aus Orangenterpen, Limonen, Pinen oder einer Kombination davon.
|3| Die Zusammensetzung nach einer der vorherigen Ausführungsformen, wobei der Gesamtgewichtsanteil an Komponenten beinhaltend eines oder mehrerer der Elemente ausgewählt aus der Gruppe bestehend aus Gold, Rhodium, Vanadium, Palladium, Platin, Osmium und Wolfram weniger als 10 Gew.-%, bezogen auf das Gesamtgewicht der Zusammensetzung beträgt.
|4| Die Zusammensetzung nach einer der vorherigen Ausführungsformen, wobei die mindestens eine Carbonsäure mit mindestens 5 Kohlenstoffatomen ist. Besonders bevorzugt ist Neodecansäure.
|5| Die Zusammensetzung nach einer der vorherigen Ausführungsformen, wobei das Gewichtsverhältnis von Komponente a) zu Komponente b) in einem Bereich von 4:1 bis 1:4 beträgt.
|6| Die Zusammensetzung nach einer der vorherigen Ausführungsformen, wobei die Summe der Gewichtsanteile a) und b) in einem Bereich von 20 bis 95 Gew.-%, bezogen auf das Gesamtgewicht der Zusammensetzung beträgt.
|7| Die Zusammensetzung nach einer der vorherigen Ausführungsformen, wobei der Gewichtsanteil der Komponente a) in Bereich von 10 bis 80 Gew.-%, bezogen auf das Gesamtgewicht der Zusammensetzung beträgt.
|8| Die Zusammensetzung nach einer der vorherigen Ausführungsformen, wobei das Gewichtsverhältnis von Silber zu der Summe der Elemente Gold, Rhodium, Vanadium, Palladium, Platin, Osmium, Kupfer und Wolfram mehr als 100:1, bevorzugt mehr als 150:1 beträgt, bezogen auf die Gewichtsanteile in der Zusammensetzung, beträgt.
|9| Die Zusammensetzung nach einer der vorherigen Ausführungsformen, wobei das Gewichtsverhältnis von Silber zu Rhodium mehr als 100:1, bevorzugt mehr als 150:1 beträgt, bezogen auf die Gewichtsanteile in der Zusammensetzung, beträgt.
|10|Die Zusammensetzung einer der vorherigen Ausführungsformen, wobei das Silbercarboxylat, Silberneodecanoat ist.
|11|Die Zusammensetzung nach einer der vorherigen Ausführungsformen, wobei der Gehalt an Metallpartikeln weniger als 1 Gew.-%, bezogen auf das Gesamtgewicht der Zusammensetzung beträgt.
|12|Die Zusammensetzung nach einer der vorherigen Ausführungsformen, wobei der Edelmetallgehalt in einem Bereich von 1 bis 30 %, bezogen auf das Gesamtgewicht der Zusammensetzung, beträgt.
|13|Die Zusammensetzung nach einer der vorherigen Ausführungsformen, wobei eine auf einem Substrat in einer Menge von 5 µl/cm² auf aufgebrachte Schicht dieser Zusammensetzung, die im Anschluss mindestens 1 min. bei 230 °C gesintert und auf Raumtemperatur abgekühlt wird, einen Glanz von mehr als 1300 GU aufweist.
|14|Die Zusammensetzung nach einer der vorherigen Ausführungsformen, wobei eine auf einem Substrat in einer Menge von 5 µl/cm² auf aufgebrachte Schicht dieser Zusammensetzung, die im Anschluss mindestens 1 min. bei 230 °C gesintert und auf Raumtemperatur abgekühlt wird, eine elektrische Leitfähigkeit von mindestens 30% aufweist, bezogen auf die Leitfähigkeit von Silber.
|15|Die Zusammensetzung nach einer der vorherigen Ausführungsformen, wobei die Zusammensetzung mindestens eine der folgenden weiteren Komponenten aufweist:
   i) Organisches Lösemittel;
   ii) Haftvermittler;
   iii) Viskositätshilfsmittel;
   iv) Additiv; oder
   eine Kombination von zwei oder mehr davon.
|16|Die Zusammensetzung nach einer der vorherigen Ausführungsformen, wobei die Zusammensetzung eine Viskosität in einem Bereich von 5 bis 5000 mPas aufweist.
|17|Ein Verfahren zum Herstellen einer Zusammensetzung gemäß einer der Ausführungsformen 1 bis |16| beinhaltend folgende Schritte:
   (I) Bereitstellen des Terpens;
   (II) Bereitstellen des Silbercarboxylats;
   (III) Bereitstellen mindestens einer weiteren Komponente in Form einer Carbonsäure;
   (IV) Mischen der in Schritt (I) bis (III) bereitgestellten Komponenten.
|18|Eine Tinte für den Tintenstrahldruck, wobei die Tinte eine Zusammensetzung nach einem der Ausführungsformen 1 bis |17| beinhaltet.
|19|Eine Paste zum Drucken in einem Siebdruckverfahren, wobei die Paste eine Zusammensetzung nach einem der Ausführungsformen 1 bis |17| beinhaltet.
|20|Ein Verfahren zum Herstellen eines Musters auf einem Substrat, mindestens beinhaltend folgende Schritte:
   A) Bereitstellen eines Substrats und einer Zusammensetzung beinhaltend Silbercarboxylat und Terpen, sowie gegebenenfalls mindestens eine weitere Komponente;
   B) Aufbringen der Zusammensetzung auf dem Substrat unter Erhalt eines Vorläufers mit dem Muster;
   C) Behandeln des Vorläufers mit dem Muster gemäß einem Behandlungsschritt ausgewählt aus der gruppe bestehend aus:
      a) bei einer Temperatur von mehr als 200°C für mindestens 10 Minuten, wobei das Behandeln bevorzugt in einer Atmosphäre von Luft erfolgt;
      b) einer photonischen Sinterung,
      c) einer Kombination von a) und b),
   wobei das Substrat erhalten wird, auf dem das Muster aufgebracht ist.
   In einem optionalen Schritt D) kann ein Abkühlen auf Raumtemperatur durchgeführt werden.
|21|Das Verfahren nach Ausführungsform |20|, wobei das Terpen ausgewählt ist aus der Gruppe bestehend aus Orangenterpen, Limonen und Pinen oder einer Kombination davon.
|22|Das Verfahren nach Ausführungsform |20|oder |21|, wobei das Substrat ausgewählt ist aus der Gruppe bestehend aus Glas, Porzellan, Steingut, Steinzeug, Feinsteinzeug, Emaille, Kunststoff, Silizium, Siliziumdioxid, Aluminiumoxid, Galliumarsenid, Germanium, Silizium-Germanium-Legierung, Indiumphosphid, ein Metall, oder eine Kombination von zwei oder mehr davon.
|23|Das Verfahren nach einer der Ausführungsformen |20| bis |22|, wobei das Muster ausgewählt ist aus einem Element der Gruppe bestehend aus
   (A) einem Glanzdekor;
   (B) einer elektrisch leitenden Struktur, oder
   (C) einer Kombination von (A) und (B).
|24|Das Verfahren nach einer der Ausführungsformen |20| bis |23|, wobei das Aufbringen durch einen Drucker erfolgt.
|25|Das Verfahren nach einer der Ausführungsformen |20| bis |24|, wobei das Aufbringen mittels Tintenstrahldruck erfolgt.
|26|Das Verfahren nach einer der Ausführungsformen |20| bis |24|, wobei das Aufbringen mittels Siebdruck erfolgt.
|27|Das Verfahren nach einer der Ausführungsformen |20| bis |26|, wobei das Muster mindestens eine der folgenden Eigenschaften beinhaltet:
   i) Einen Glanz von mindestens 1300 GU, gemessen nach DIN ISO 2813:2015;
   ii) eine elektrische Leitfähigkeit von mindestens 30%, bezogen auf die Leitfähigkeit von Silber; oder
   eine Kombination der beiden Eigenschaften.
|28|Ein Drucker mindestens beinhaltend einen Druckkopf und ein Reservoir, wobei das Reservoir eine Zusammensetzung nach einem der Ausführungsformen |1| bis |16|, oder eine Tinte gemäß Ausführungsform |18|, oder eine Paste gemäß Ausführungsform |19| beinhaltet.
|29|Der Drucker nach Ausführungsform |28|, wobei der Drucker geeignet und vorgesehen ist, ein Verfahren gemäß einem der Ausführungsformen |20| bis |27| auszuführen.
|*30*|Ein Gegenstand beinhaltend mindestens zumindest zum Teil eine Beschichtung beinhaltend Silber, wobei die Beschichtung einen Gesamtgewichtsanteil an Elementen ausgewählt aus der Gruppe bestehend aus Gold, Rhodium, Vanadium, Palladium, Platin, Osmium und Wolfram von weniger als 5 Gew.-%, bezogen auf das Gesamtgewicht der Beschichtung beträgt.
|31|Der Gegenstand gemäß Ausführungsform |30|, wobei die Beschichtung gekennzeichnet ist durch mindestens eines der folgenden Merkmale:
   (I) Einen Glanz von mehr als 1300 GU;
   (II) eine elektrische Leitfähigkeit von mehr als von mindestens 30%, bezogen auf die Leitfähigkeit von Silber; oder
   (III) einer Kombination der beiden Merkmale (I) und (II).
|32|Eine Verwendung einer Zusammensetzung beinhaltend ein Silbercarboxylat, insbesondere Silberneodecanoat, mindestens ein Terpen und als weitere Komponente eine Carbonsäure zum Aufbringen eines Musters.
|33|Die Verwendung gemäß Ausführungsform |32|, wobei das Muster einen Glanz von mindestens 1300 GU aufweist.
|34|Die Verwendung gemäß Ausführungsform |32| oder |33|, wobei das Muster eine elektrische Leitfähigkeit von mindestens 30%, bezogen auf die Leitfähigkeit von Silber, aufweist.

### Allgemeines

In der vorliegenden Beschreibung beinhalten Bereichsangaben auch die als Grenzen genannten Werte. Eine Angabe der Art "im Bereich von X bis Y" in Bezug auf eine Größe A bedeutet folglich, dass A die Werte X, Y und Werte zwischen X und Y annehmen kann. Einseitig begrenzte Bereiche der Art "bis zu Y" für eine Größe A bedeuten entsprechend als Werte Y und kleiner als Y.

### Ausführliche Beschreibung der Erfindung

Der erste Gegenstand der vorliegenden Erfindung betrifft eine Zusammensetzung beinhaltend mindestens die Komponenten
(I) Silbercarboxylat; und
(II) ein Terpen.
wobei die Zusammensetzung als weitere Komponente mindestens eine Carbonsäure beinhaltet.

Die erfindungsgemäße Zusammensetzung kann gegebenenfalls ferner beinhalten eine oder mehrere weitere Komponenten, jeweils insbesondere ausgewählt aus der Gruppe bestehend aus Haftvermittler, Viskositätshilfsmittel, organisches Lösemittel wie zum Beispiel Glykolether, und Additive. Die Summe der Gewichtsanteile aller Komponenten der erfindungsgemäßen Zusammensetzung ergibt stets 100 Gew.-%.

Die erfindungsgemäße Zusammensetzung kann prinzipiell jeden dem Fachmann bekannten und geeignet erscheinenden Zustand aufweisen. Der Zustand kann von den Umgebungsbedingungen der erfindungsgemäßen Zusammensetzung, einem oder mehreren der Komponenten der erfindungsgemäßen Zusammensetzung selbst, oder einer Kombination von diesen abhängen. Bevorzugt ist die erfindungsgemäße Zusammensetzung flüssig bis pastös. Eine Zusammensetzung ist flüssig, wenn ihre Viskosität in einem Bereich von 1 bis 300 mPas beträgt. Die Viskosität einer Zusammensetzung wird gemäß der Norm DIN 53019 (Viskosimetrie - Messung von Viskositäten und Fließkurven mit Rotationsviskosimetern) bestimmt. Hierfür kann unter anderem ein Brookfield Rheometer (Brookfield DV3) eingesetzt werden.

Als erfindungsgemäße Zusammensetzung kommen prinzipiell alle dem Fachmann bekannten und für die vorliegende Erfindung geeignet erscheinenden Zusammensetzungen in Betracht, die die für den ersten Gegenstand der Erfindung notwendigen Komponenten, mindestens ein Silbercarboxylat, mindestens ein Terpen beinhalten wobei die Zusammensetzung als weitere Komponente mindestens eine Carbonsäure beinhaltet.

Ein Silbercarboxylat im vorliegenden Kontext ist ein Salz mit Silberkationen und Carbonsäureanionen. Der Carbonsäureteil des Carbonsäureanions kann linear oder verzweigt sein, oder zyklische Strukturelemente aufweisen, sowie gesättigt oder ungesättigt sein. Das Silbercarboxylat ist üblicherweise zunächst ein Feststoff. Sofern die erfindungsgemäße Zusammensetzung flüssig oder ein Gemisch mit festen und flüssigen Bestandteilen ist, kann das Silbercarboxylat zumindest zu einem Teil, bis hin zu vollständig in gelöste Form übergegangen sein.

Bevorzugt werden lineare, gesättigte Silbercarboxylate ausgewählt. Insbesondere bevorzugt ist ein Element ausgewählt aus der Gruppe bestehend aus Silberacetat, Silberpropionat, Silberbutanoat, Silberpentanoat, Silberhexanoat, Silberheptanoat, Silberoctanoat, Silbernonanoat, Silberdecanoat, Silberundecanoat, Silberdodecanoat, Silbertetradecanoat, Silberhexadecanoat, Silberoctadecanoat, sowie die Silber-iso-carboxylate und die Silber-neo-carboxylate der vorstehend genannten Elemente, oder eine Kombination von zwei oder mehr der davon. Besonders bevorzugt sind Silber-neo-carboxylate mit 5 und mehr Kohlenstoffatomen, wie zum Beispiel das Silberneopentanoat, Silberneohexanoat, Silberneoheptanoat, Silberneoocatnoat, Silberneononanoat, Silberneodecanoat und Silberneododecanoat. Die korrespondierenden Neocarbonsäuren werden zum Beispiel von Shell oder Exxon produziert. Als Silbercarboxylat besonders bevorzugt ist Silberneodecanoat.

Ein Terpen im vorliegenden Kontext ist ein natürlich vorkommender, aus Naturstoffen isolierbarer, ungesättigter Kohlenwasserstoff, dessen Gerüst sich auf eine oder mehrere Isopreneinheiten zurückführen lässt. Manche Terpene können heute auch industriell und künstlich gewonnen werden. Die Polymere von cis- und trans-Polyisopren werden üblicherweise nicht als Terpen aufgefasst. Bevorzugt ist das Terpen ein acyclisches Terpen oder ein zyklisches Terpen. Unter den zyklischen Terpenen bevorzugt sind monozyklische Terpene.

Gemäß einer bevorzugten Ausführungsform ist das Terpen ausgewählt aus der Gruppe bestehend aus Orangenterpen, Limonen und Pinen oder einer Kombination davon.

Unter Orangenterpen wird ein flüssiges Gemisch aus Terpenen mit einer Siedetemperatur im Bereich von 170 bis 180 °C (p=1bar) verstanden, das in der Regel durch Kaltpressen von Orangenschalen erhältlich ist. Orangenterpen enthält mehr als 80 Gew.-%, bevorzugt mehr als 85 Gew.-% und besonders bevorzugt mehr als 90 Gew.-% an (+)/ (-)-Limonen. Zu den weiteren Bestandteilen des Orangenterpens zählen oftmals Aldehyde Octanal, Decanal, Sinensal und Octyl- und Nerylacetat. Orangenterpen (CAS-Nr. 68647-72-3) kann zum Beispiel von der Carl Roth GmbH, 76231 Karlsruhe bezogen werden.

Ein Pinen im vorliegenden Kontext ist ein Monoterpenkohlenwasserstoff mit der Summenformel C₁₀H₁₆. Ein besonders bevorzugtes Pinen ist β-Pinen (CAS-Nr. 19902-08-0).

Limonen im vorliegenden Kontext beinhaltet (r)-(+)-Limonen, (s)-(-)-Limonen, sowie eine Mischung der beiden in einem beliebigen Verhältnis, zum Beispiel als racemisches Gemisch.

Gemäß einer weitere bevorzugten Ausführungsform der vorliegenden Erfindung beträgt das Gewichtsverhältnis von Komponente a), Silbercarboxylat, zu Komponente b), Terpen, in der erfindungsgemäßen Zusammensetzung in einem Bereich von 4:1 bis 1:4, bevorzugt 1:2 bis 2:1, oder 1:1 bis 1:2, am meisten bevorzugt von etwa 1:1,5 bis etwa 1:2. Die Angabe etwa bedeutet, dass im Rahmen der angegebenen Genauigkeit ein Fachmann alle kaufmännisch auf die genannte Zahl gerundeten Werte mitliest. Im Fall von 1:2 bedeutet dies zum Beispiel einen Bereich von jeweils einschließlich 1:1,5 bis 2:4,9, jeweils bezogen auf das Gewicht von Silbercarboxylat und Terpen. Aus einer flüssigen Zusammensetzung können solche Werte zum Beispiel aus einer HPLC-Messung ermittelt werden, wobei für jede Komponente ein charakteristisches Signal ausgewählt und ins Verhältnis gesetzt wird.

Gemäß einer weitere bevorzugten Ausführungsform der vorliegenden Erfindung beträgt die Summe der Gewichtsanteile der Komponenten a), Silbercarboxylat, und b), Terpen, in einem Bereich von 20 bis 95 Gew.-%, bezogen auf das Gesamtgewicht der Zusammensetzung. Ferner bevorzugt beträgt die Summe der Gewichtsanteile der Komponenten a) und b) in einem Bereich von 35 bis 95 Gew.-%, oder von 35 bis 80 Gew.-%, oder von 40 bis 60 Gew.-%, am meisten bevorzugt von 45 bis 55 Gew.-%, die Gew.-% jeweils bezogen auf das Gesamtgewicht der Zusammensetzung.

Gemäß einer weitere bevorzugten Ausführungsform der vorliegenden Erfindung beträgt der Gewichtsanteil der Komponente a), Silbercarboxylat, in Bereich von 10 bis 80 Gew.-%, bevorzugt von 10 bis 60 Gew.-%, oder von 15 bis 45 Gew.-%, die Gew.-% jeweils bezogen auf das Gesamtgewicht der Zusammensetzung.

Gemäß der vorliegenden Erfindung enthält die Zusammensetzung als eine weitere Komponente eine Carbonsäuren. Gemäß einer weiteren Ausführungsform der vorliegenden Erfindung kann die Zusammensetzung als eine weitere Komponente mindestens, zwei, drei oder mehrere Carbonsäuren enthalten. Als Carbonsäure kommt prinzipiell jede dem Fachmann bekannte und geeignet erscheinende Carbonsäure in Betracht, insbesondere ein oder mehrere tertiäre Carbonsäuren mit 5 und mehr Kohlenstoffatomen. Als tertiäre Carbonsäure kann eines oder eine Kombination von mehreren der nachfolgenden Elemente ausgewählt sein: Neopentansäure, Neohexanosäure, Neoheptansäure, Neooctanosäure, Neononansäure, Neodecansäure und Neododecansäure. Besonders bevorzugt ist Neodecansäure, oder einer Kombination von Neodecansäure mit einer weiteren der genannten Neocarbonsäuren. Neocarbonsäuren werden zum Beispiel von Shell oder Exxon produziert. Durch Zusatz von einer Carbonsäure oder einer Kombination von mehreren Carbonsäuren kann die erfindungsgemäße Zusammensetzung länger gelagert werden.

Gemäß einer weiteren bevorzugten Ausführungsform der vorliegenden Erfindung weist die Zusammensetzung ein Gewichtsverhältnis von Silber zu der Summe der Elemente Gold, Rhodium, Vanadium, Palladium, Platin, Osmium, Kupfer und Wolfram mehr als 100:1, bevorzugt mehr als 150:1 auf, bezogen auf die Gewichtsanteile in der Zusammensetzung.

Gemäß einer weitere bevorzugten Ausführungsform der vorliegenden Erfindung weist die Zusammensetzung ein Gewichtsverhältnis von Silber zu Rhodium mehr als 100:1, bevorzugt mehr als 150:1 auf, bezogen auf die Gewichtsanteile in der Zusammensetzung.

Gemäß einer weiteren bevorzugten Ausführungsform der vorliegenden Erfindung beträgt der Gesamtgewichtsanteil der erfindungsgemäßen Zusammensetzung an Komponenten beinhaltend eines oder mehrerer der Elemente ausgewählt aus der Gruppe bestehend aus Gold, Rhodium, Vanadium, Palladium, Platin, Osmium und Wolfram weniger als 10 Gew.-%, bevorzugt weniger als 8 Gew.-% oder 6 Gew.-%, weiter bevorzugt weniger als 5 Gew.% und am meisten bevorzugt weniger als 2 Gew.-% oder weniger als 1 Gew.-%, die Gew.-% jeweils bezogen auf das Gesamtgewicht der Zusammensetzung.

Gemäß einer weiteren bevorzugten Ausführungsform der vorliegenden Erfindung beträgt der Gesamtgewichtsanteil der erfindungsgemäßen Zusammensetzung an Komponenten beinhaltend eines oder mehrerer der Elemente ausgewählt aus der Gruppe bestehend aus Rhodium, Vanadium und Osmium weniger als 1 Gew.-%, bevorzugt weniger als 0,5 Gew.-% oder weniger als 0,2 Gew.-%, die Gew.-% jeweils bezogen auf das Gesamtgewicht der Zusammensetzung.

Gemäß einer weiteren bevorzugten Ausführungsform der vorliegenden Erfindung beträgt der Gehalt an Metallpartikeln der erfindungsgemäßen Zusammensetzung weniger als 1 Gew.-%, oder weniger als 0,5 Gew.-%, oder weniger als 0,2 Gew.-%, die Gew.-% jeweils bezogen auf das Gesamtgewicht der Zusammensetzung beträgt. Folglich enthält die erfindungsgemäße Zusammensetzung praktisch keine Metallpartikel. Metallpartikel im vorliegenden Kontext sind in jedem Fall Feststoffe.

Gemäß einer weiteren bevorzugten Ausführungsform der vorliegenden Erfindung beträgt der Edelmetallgehalt in einem Bereich von 1 bis 30 %, jeweils bezogen auf das Gesamtgewicht der Zusammensetzung. Unter dem Begriff Edelmetalle werden im Kontext dieser Erfindung folgende Stoffe verstanden: Gold, Silber, Quecksilber, Palladium, Platin, Rhodium, Iridium, Ruthenium und Osmium.

Gemäß einer weiteren bevorzugten Ausführungsform der vorliegenden Erfindung weist eine auf einem Substrat in einer Menge von 5 µl/cm² aufgebrachte Schicht der erfindungsgemäßen Zusammensetzung, die mindestens 1 min. bei 230 °C gesintert und im Anschluss auf Raumtemperatur abgekühlt wurde, einen Glanz von mehr als 1300 GU auf. Raumtemperatur bedeutet im Rahmen der vorliegenden Erfindung eine Temperatur von +20 °C (293 K).

Als Substrat im Zusammenhang mit der vorliegenden Erfindung eignen sich alle dem Fachmann bekannten und geeignet erscheinenden Körper. Besonders bevorzugte Substrate beinhalten zumindest zum Teil ein Element ausgewählt aus der Gruppe bestehend aus Glas, Porzellan, Steingut, Steinzeug, Feinsteinzeug, Metall, Kunstharz, Emaille, Kunststofffolie, Kunststoffgegenstände, Silizium, Siliziumdioxid, Aluminiumoxid, Galliumarsenid, Germanium, Silizium-Germanium-Legierung, Indiumphosphid, oder eine Kombination von zwei oder mehr davon.

Gemäß einer weiteren bevorzugten Ausführungsform der vorliegenden Erfindung weist eine auf einem Substrat in einer Menge von 5 µl/cm² aufgebrachte Schicht der erfindungsgemäßen Zusammensetzung, die mindestens 1 min. bei 230 °C gesintert und im Anschluss auf Raumtemperatur abgekühlt wurde, eine elektrische Leitfähigkeit von mindestens 30%, bezogen auf die Leitfähigkeit von Silber auf. Die Leitfähigkeit von Silber beträgt 6,14*10⁷ A*m/V, bei 20°C.

Gemäß einer weiteren bevorzugten Ausführungsform der vorliegenden Erfindung weist die Zusammensetzung mindestens eine der folgenden weiteren Komponenten auf:
i) Organisches Lösemittel;
ii) Haftvermittler;
iii) Viskositätshilfsmittel;
iv) Additiv; oder
eine Kombination von zwei oder mehr davon.

Bevorzugt weist die erfindungsgemäße Zusammensetzung einen Gewichtsanteil in einem Bereich von 0.1 bis 80 Gew.-%, bevorzugt von 20 bis 80, oder von 20 bis 50, die Gew.-%jeweils bezogen auf das Gesamtgewicht der erfindungsgemäßen Zusammensetzung, an organischem Lösemittel auf.

Als organisches Lösemittel kann bevorzugt eines oder mehrere Lösemittel ausgewählt aus der Gruppe der Glycolether, ein oder mehrere weitere Terpene, oder eine Kombination von zwei oder mehr der genannten Lösemittel sein. Dies beinhaltete eine Kombination mehrerer Glycolether, mehrerer Terpene, eines oder mehrerer Glycolether mit einem oder mehreren Terpenen.

Unter Glycolether werden organische Stoffe verstanden, die zumindest eine Ethylenglycoleinheit oder eine Diethylenglycoleinheit aufweisen. Besonders bevorzugt als Glycolether ausgewählt ist Propylenglykolether oder Dipropylenglykolether. Kommerziell verfügbare Beispiele sind Dowanol PNP (Propylenglykol-n-propylether) und Dowanol PnB (Propylenglykol-n-butylether), Dowanol DPnB (Dipropylenglykol-n-butylether) sowie Dowanol DPnP (Dipropylenglykol-n-propylether)

Als weiteres Terpen kann prinzipiell eines der als Komponente b) der vorliegenden Erfindung genannten Terpene, oder auch ein Terpen, das dort nicht genannt ist, ausgewählt sein.

Bevorzugt weist die erfindungsgemäße Zusammensetzung Haftvermittler mit einem Gewichtsanteil in einem Bereich von 0.1 bis 5 Gew.-%, bezogen auf das Gesamtgewicht der erfindungsgemäßen Zusammensetzung, auf.

Als Haftvermittler eignen sich bevorzugt Rhodiumalkylverbindungen. Die Rhodiumalkylverbindungen weisen mindestens einen Alkylrest auf. Weist eine Rhodiumalkylverbindung mehr als einen Alkylrest auf, zum Beispiel 2 oder 3 Alkylreste, so können diese Alkylreste gleich oder verschieden sein. Der mindestens eine Alkylrest weist bevorzugt eine Länge von 2 bis 20 Kohlenstoffatomen auf, besonders bevorzugt eine Länge von 12, 14, 16 oder 18 Kohlenstoffatomen. Ein besonders bevorzugter Haftvermittler ist Rhodium Nonanoat.

Bevorzugt weist die erfindungsgemäße Zusammensetzung Viskositätshilfsmittel mit einem Gewichtsanteil in einem Bereich von 5 bis 30 Gew.-%, weiter bevorzugt in einem Bereich von 10 bis 20 Gew.-% auf, die Gew.-% jeweils bezogen auf das Gesamtgewicht der erfindungsgemäßen Zusammensetzung.

Als Viskositätshilfsmittel wird bevorzugt ein Kolphoniumharz oder Derivate davon ausgewählt. Ein besonders bevorzugtes kommerzielles Produkt ist Balsamharz, erhältlich bei der Fa. H.Reynaud & Fils GmbH, Hamburg.

Bevorzugt weist die erfindungsgemäße Zusammensetzung weitere Additive mit einem Gewichtsanteil in einem Bereich von 0,05 bis 3 Gew.-%, weiter bevorzugt in einem Bereich von 0,05 bis 1 Gew.-% auf, die Gew.-% jeweils bezogen auf das Gesamtgewicht der erfindungsgemäßen Zusammensetzung. Als weitere Additive kommen alle chemischen Stoffe und Gemische in Betracht, die dem Fachmann bekannt und für den vorliegenden Einsatzzweck geeignet erscheinen. Insbesondere bevorzugt als weitere Additive sind silikonhaltige Additive, zum Beispiel eines oder mehrere enthaltend polyethermodifiziertes Polydimethylsiloxan. Solche Additive sind zum Beispiel erhältlich unter den Markennamen BYK von der BYK Additives & Instruments GmbH, 46483 Wesel.

Gemäß einer weiteren bevorzugten Ausführungsform der vorliegenden Erfindung weist die Zusammensetzung eine Viskosität in einem Bereich von 5 bis 5000 mPas, zum Beispiel in einem Bereich von 2 bis 100 mPas, oder in einem Bereich von 500 bis 3000 mPas. Die Viskosität wird bestimmt der in den Testmethoden angegebenen Norm DIN 53019 unter Verwendung des dort bezeichneten Messgeräts.

Ein zweiter Aspekt der vorliegenden Erfindung ist ein Verfahren zum Herstellen einer Zusammensetzung gemäß dem ersten Aspekt der vorliegenden Erfindung oder einer der Ausführungsformen des ersten Aspekts der Erfindung, wobei das Verfahren folgende Schritte beinhaltet:
(I) Bereitstellen des Terpens;
(II) Bereitstellen des Silbercarboxylats;
(III) Bereitstellen der weiteren Komponenten;
(IV) Mischen der in Schritt (I) bis (III) bereitgestellten Komponenten.

Als Terpen, Silbercarboxylat und gegebenenfalls weitere Komponenten, zum Beispiel einer oder mehrerer Carbonsäuren, werden die gemäß dem ersten Aspekt der vorliegenden Erfindung oder einer ihrer Ausführungsformen genannten Komponenten eingesetzt. Das Mischen kann prinzipiell auf jede dem Fachmann geläufige und für den vorliegenden Fall geeignet erscheinende Art durchgeführt werden. Zum Beispiel können die Komponenten (I), (II) und (III) zusammengegeben und anschließend verrührt werden. Alternativ oder ergänzend kann ein so gebildetes Gemisch durch Eintrag von Luft- oder anderen Gasblasen weiter vermischt werden. Ferner kann in einigen Fällen das Mischen bei erhöhter Temperatur erfolgen. In einer Ausführungsform wird bei erhöhter Temperatur vermischt, aber eine Temperatur des Gemischs von 40 °C nicht überschritten. Die Lagerung der verfahrensgemäß hergestellten Zusammensetzung erfolgt bei Raumtemperatur, oder bei niedrigerer Temperatur, z.B. in einem Kühlschrank (T=2-8 °C).

Ein dritter Aspekt der vorliegenden Erfindung ist eine Tinte, insbesondere für den Tintenstrahldruck, wobei die Tinte eine Zusammensetzung gemäß dem ersten Aspekt der vorliegenden Erfindung oder einer ihrer Ausführungsformen beinhaltet. Eine Tinte ist eine flüssige Zusammensetzung, die für eine Anwendung mittels eines Tintenstrahldruckers (Inkjet) geeignet ist.

Bevorzugt weist die Tinte eine Viskosität in einem Bereich von 2 bis 100 mPas, oder von 2 bis 50 mPas auf. Die Viskosität wurde entsprechend der Angaben im Abschnitt "Testmethoden" ermittelt.

Ein vierter Aspekt der vorliegenden Erfindung ist eine Paste, insbesondere zum Drucken in einem Siebdruckverfahren, wobei die Paste eine Zusammensetzung gemäß dem ersten Aspekt der vorliegenden Erfindung oder einer ihrer Ausführungsformen beinhaltet. Eine Paste ist im Kontext der vorliegenden Erfindung ein Gemisch aus mindestens einem Feststoff und mindestens einer Flüssigkeit, das für den Einsatz in einem Siebdruckverfahren geeignet ist.

Bevorzugt weist die Paste eine Viskosität in einem Bereich von 500 bis 3000 mPas auf. Die Viskosität wurde entsprechend der Angaben im Abschnitt "Testmethoden".

Weiter bevorzugt beinhaltet die Paste in einem Bereich von 20 bis 50 Gew % an Feststoff, wobei die Gew.-% jeweils auf die Gesamtmenge der Paste bezogen sind.

Ein fünfter Aspekt der vorliegenden Erfindung ist ein Verfahren zum Herstellen eines Musters auf einem Substrat, mindestens beinhaltend folgende Schritte:
A) Bereitstellen eines Substrats und einer Zusammensetzung beinhaltend Silbercarboxylat, mindestens eine Carbonsäure und Terpen;
B) Aufbringen der Zusammensetzung auf dem Substrat unter Erhalt eines Vorläufers mit dem Muster;
C) Behandeln des Vorläufers mit dem Muster gemäß einem Behandlungsschritt ausgewählt aus der Gruppe bestehend aus:
   a. bei einer Temperatur von mehr als 200°C für mindestens 10 Minuten, wobei das Behandeln bevorzugt in einer Atmosphäre von Luft erfolgt;
   b. einer photonischen Sinterung, oder
   c. einer Kombination von a) und b),
wobei das Substrat erhalten wird, auf dem das Muster aufgebracht ist. Das Behandeln des Vorläufers mit dem Muster wird bevorzugt in einer Atmosphäre von Luft durchgeführt.

Als Zusammensetzung in Schritt A) wird bevorzugt eine erfindungsgemäße Zusammensetzung gemäß des ersten Aspekts der Erfindung oder gemäß einer der Ausführungsformen davon ausgewählt. Gegebenenfalls schließt an Schritt C) ein Schritt D), Abkühlen auf Raumtemperatur, an.

Das Aufbringen der Zusammensetzung auf dem Substrat kann prinzipiell durch jedes dem Fachmann bekannte und geeignet erscheinende Verfahren durchgeführt werden. Zu diesen Verfahren gehört ein Drucken, insbesondere Siebdrucken oder Tintenstrahldrucken, Spritzauftrag, Pinselauftrag, Schreiben und Übertragen der Zusammensetzung von einer Schablone auf ein Substrat, wie zum Beispiel beim Transferdruck. Besonders bevorzugt ist ein Aufbringen mittels Tintenstrahldruck und ein Aufbringen mittels Siebdruck.

Gemäß einer bevorzugten Ausführungsform des fünften Aspekts der Erfindung ist das Terpen ausgewählt ist aus der Gruppe bestehend aus Orangenterpen, Limonen und Pinen, oder einer Kombination davon. Bevorzugte Ausgestaltungen dieser Ausführungsform sind diejenigen, die bereits als bevorzugt im Zusammenhang mit der Komponente b) des ersten Aspekts der Erfindung beschrieben sind.

Gemäß einer bevorzugten Ausführungsform des fünften Aspekts der Erfindung ist das Substrat ausgewählt ist aus der Gruppe bestehend aus Glas, Porzellan, Steingut, Steinzeug, Feinsteinzeug, Emaille, Kunststoff, Kunstharz, Silizium, Siliziumdioxid, Aluminiumoxid, Galliumarsenid, Germanium, Silizium-Germanium-Legierung, Indiumphosphid, ein Metall, oder eine Kombination von zwei oder mehr davon. Bevorzugte Kunststoffe sind ausgewählt aus der Gruppe bestehend aus Polyethylenterephthalat (PET), Polyimid (PI), Polyethylennaphthalat (PEN), Polycarbonat (PC) oder eine Kombination von zwei oder mehr davon. Wird als Substrat ein Metall oder ein Kunststoff ausgewählt, so sollte dieser einen Schmelzpunkt oberhalb der Temperaturen aufweisen, die im Rahmen des Aufbringens der erfindungsgemäßen Zusammensetzung erreicht werden. Dies gilt insbesondere für die Temperatur in Schritt C) des fünften Aspekts der Erfindung.

Gemäß einer bevorzugten Ausführungsform des fünften Aspekts der Erfindung ist das Muster ausgewählt aus einem Element der Gruppe bestehend aus
(A) einem Glanzdekor; und
(B) einer elektrisch leitenden Struktur.

Unter einem Glanzdekor wird ein glänzendes Dekor verstanden. Ein Dekor ist eine in der Regel nicht funktionale Verzierung eines Gegenstands. Der Glanz eines Dekors beziehungsweise einer Beschichtung wird gemäß der Angaben im Abschnitt "Testmethoden" bestimmt. Das Dekor dieser Probe ist ein Glanzdekor, wenn der Glanz der Beschichtung 700 GU (GU = Glanzeinheit, gloss units) oder mehr beträgt. Für polierte Metalloberflächen und Spiegel können allerdings wesentlich höhere Werte von bis zu 2000 GU erreicht werden. Zur Kalibrierung wird der vom Gerätehersteller mitgelieferte "calibration holder" benutzt.

Gemäß einer weiteren bevorzugten Ausführungsform des fünften Aspekts der Erfindung erfolgt das Aufbringen der Zusammensetzung durch einen Drucker. Prinzipiell kommen alle Drucker und alle Druckverfahren in Betracht, die dem Fachmann bekannt sind und geeignet erscheinen. Besonders bevorzugt wird das Aufbringen der erfindungsgemäßen Zusammensetzung mittels Tintenstrahldruck oder mittels Siebdruck durchgeführt.

Unter einer elektrisch leitenden Struktur werden alle dem Fachmann bekannten und vorliegend geeignet erscheinenden elektrisch leitende Strukturen verstanden, insbesondere Leiterbahnen, Schaltbilder und ähnliches. Eine Struktur, zum Beispiel eine Leiterbahn, ist dann elektrisch leitend, wenn die Volumenleitfähigkeit σ bei 25°C 1•10⁶ S/m oder mehr beträgt. Dies wird mittels eines Widerstandsmessgerätes, LCR Meter der Firma Rhode & Schwarz HM 8118, bestimmt.

Gemäß einer weiteren bevorzugten Ausführungsform des fünften Aspekts der Erfindung weist das Muster mindestens eine der folgenden Eigenschaften auf:
i) Einen Glanz von mindestens 1300 GU bei 20°; oftmals wird ein Wert von 1600 GU nicht überschritten;
ii) eine elektrische Leitfähigkeit von mindestens 30%, bezogen auf die Leitfähigkeit von Silber; oftmals wird eine elektrische Leitfähigkeit von 50% nicht überschritten;

Ein sechster Aspekt der vorliegenden Erfindung ist ein Drucker mindestens beinhaltend einen Druckkopf und ein Reservoir, wobei das Reservoir eine Zusammensetzung gemäß erstem Aspekt der vorliegenden Erfindung oder einer seiner Ausführungsformen, oder eine Tinte gemäß dem dritten Aspekt der vorliegenden Erfindung oder einer seiner Ausführungsformen, oder eine Paste gemäß dem vierten Aspekt der vorliegenden Erfindung oder einer seiner Ausführungsformen beinhaltet.

Als Drucker kommen alle dem Fachmann bekannten und geeignet erscheinenden Drucker in Betracht. Als Drucker werden insbesondere Tintenstrahldrucker und Drucker, die mit Siebdruck arbeiten, bevorzugt.

Gemäß einer bevorzugten Ausführungsform des sechsten Aspekts der Erfindung ist der Drucker geeignet und vorgesehen, ein Verfahren gemäß dem zweiten Aspekt der Erfindung oder einer seiner Ausführungsformen auszuführen.

Ein siebter Aspekt der vorliegenden Erfindung ist ein Gegenstand beinhaltend mindestens zumindest zum Teil eine Beschichtung beinhaltend Silber, wobei die Beschichtung einen Gesamtgewichtsanteil an Elementen ausgewählt aus der Gruppe bestehend aus Gold, Rhodium, Vanadium, Palladium, Platin, Osmium und Wolfram von weniger als 10 Gew.-%, oder weniger als 5 Gew.-%, oder weniger als 1 Gew.-%, oder weniger als 0,1 Gew.-%, oder weniger als 0,05 Gew.-%, die Gew.-% jeweils bezogen auf das Gesamtgewicht der Beschichtung, beträgt. Bevorzugt weist die Beschichtung keines der genannten Elemente auf.

Gemäß einer bevorzugten Ausführungsform des siebten Aspekts der Erfindung ist die Beschichtung gekennzeichnet durch mindestens eines der folgenden Merkmale:
a) Einen Glanz von mehr als 1300 GU;
b) eine elektrische Leitfähigkeit von mindestens 30% aufweist, bezogen auf die Leitfähigkeit von Silber; oder
c) eine Kombination der beiden Merkmale.

Ein achter Aspekt der vorliegenden Erfindung ist eine Verwendung einer Zusammensetzung beinhaltend ein Silbercarboxylat, bevorzugt Silberneodecanoat, mindestens eine Carbonsäure und mindestens ein Terpen zum Aufbringen eines Musters. Besonders bevorzugte Verwendungen der Zusammensetzung sind als Tinte im Tintenstrahldruck oder als Paste im Siebdruck. Besonders bevorzugte Verwendungen der Zusammensetzung sind das Herstellen eines Dekors und das Herstellen elektrisch leitfähiger Strukturen, wie zum Beispiel elektrisch leitenden Bahnen, Schaltkreisen und ähnlichem.

Besonders bevorzugt hat das Muster, oder das Dekor, oder die elektrisch leitfähige Struktur einen Glanz von mehr als 1300 GU Zu weiteren bevorzugten Glanzwerten wird auf die Glanzwerte der Beschichtung im den siebten Gegenstand der Erfindung verwiesen.

Besonders bevorzugt hat das Muster, oder das Dekor, oder die elektrisch leitfähige Struktur eine elektrische Leitfähigkeit von mehr als 30% bezogen auf Silber. Zu weiteren bevorzugten elektrischen Leitfähigkeiten wird auf die Werte zur elektrischen Leitfähigkeit der Beschichtung im den siebten Gegenstand der Erfindung verwiesen.

### Figuren

Die Erfindung wird im Folgenden anhand von Figuren beispielhaft illustriert. Die Erfindung ist nicht auf die in den Figuren gezeigten Ausführungsformen und Details beschränkt.

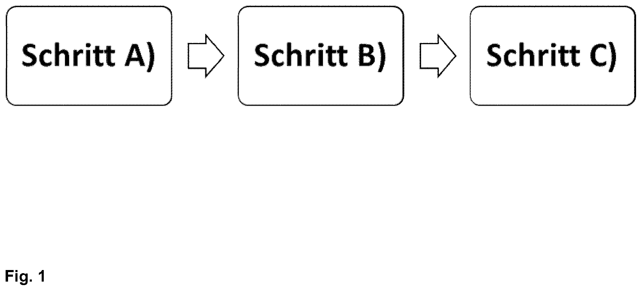

**Fig. 1** zeigt ein Flussdiagramm für ein Verfahren zum Herstellen eines Musters.

### Beschreibung der Figuren

**Figur 1** zeigt ein Flussdiagramm für ein Verfahren zum Herstellen eines Musters. In einem Schritt A) wird ein Substrat und eine Zusammensetzung, hier eine Glanztinte bereitgestellt. In Schritt B) wird die Zusammensetzung in einem zuvor ausgewählten Muster auf das Substrat aufgebracht. Anschließend wird in Schritt C) das so behandelte Substrat bei erhöhter Temperatur für eine gewisse Zeit behandelt, hier bei 230 °C für 10 Minuten. Dabei wird das Muster auf dem Substrat dauerhaft fest aufgebracht.

### Testmethoden

### a. Glanzmessung

Die Glanzmessung wurde gemäß der Norm DIN EN ISO 2813:2015-02 mit dem Glanzmessgerät PolyGloss GL0030, erhältlich bei TQC B.V. Niederlande, bei einem Winkel von 20° und einer Temperatur von 23°C durchgeführt. Die Kalibrierung erfolgte gemäß Vorschrift im Benutzerhandbuch (bezeichnet als: User Guide V1.01 092013). Die in der Norm festgelegten Messgeometrien wurden eingehalten. Als Substrate wurden Glas und Polyimidfolie verwendet. Die Proben waren eben und wiesen keine Anisotropie auf. Die Trockenschichtdicke betrug im Falle von flüssigen Proben < 5 µm und im Falle von pastösen Proben < 5 µm.

### b. Elektrische Leitfähigkeit

Die elektrische Leitfähigkeit wurde mit einem Widerstandsmessgerät LCR Meter der Firma Rhode & Schwarz HM 8118 (Vierpunktmessung) Deutschland, durchgeführt.

### c. Viskosität

Die Viskosität von pastösen Proben wurden gemäß der Norm DIN 53019 mit einem Brookfield Rheometer Typ DV3, Spindel Nr. 14, 10 RPM und 25 °C bestimmt.

Die Viskosität von flüssigen Proben wurden gemäß der Norm DIN 53019 mit einem Brookfield Rheometer Typ DV3, Spindel Nr. 21, 100 RPM und 20 °C bestimmt.

### d. Bestimmung von Metallgehalten (ICP-Analyse)

Das induktiv gekoppelte Plasma (ICP) ist mit einer optischen Emissionsspektrometrie (OES) zur Auswertung gekoppelt. Typische Bestimmungsgrenzen nach der hier angewendeten Methode liegen bei 1ppm (jeweils bezogen auf die eingewogene Probenmenge). Die Bestimmung der Elementkonzentration mit dem Messgerät erfolgt nach Maßgabe des Geräteherstellers (ICP-OES: VARIAN Vista MPX) und unter Verwendung von zertifizierten Referenzflüssigkeiten zur Kalibrierung. Die von den Geräten bestimmte Elementkonzentration in der Lösung (100 ml) werden dann auf die ursprüngliche Einwaage der Probe (0,1g) umgerechnet.

Anmerkung: Die zu analysierende Probe wird mit Königswasser (eine Mischung von 3 Teilen HCl, 37 Gew.-%. und 1 Teil HNO₃, 65 Gew.-%) in einem Mikrowellenreaktionssystem MultiwavePro der Fa. Anton Paar aufgeschlossen.

Folgende Elemente können auf diese Weise bestimmt werden: Ag, Au, B, Bi, Ce, Co, Cr, Cu, Fe, In, Ir, Mn, Ni, Pd, Pt, Rh, Ru, Sb, Si, Sn, Ti, V, Zn, Zr.

### Beispiele

Die Erfindung wird im Folgenden durch Beispiele weiter beispielhaft illustriert. Die Erfindung ist nicht auf die Beispiele beschränkt.

### Beispielzusammensetzungen

Es wurden folgende Zusammensetzungen hergestellt (Angaben jeweils in Gew.-% der Komponente:

| Beispiel | I | II | III | IV | V | VI |
|---|---|---|---|---|---|---|
| Komponente | | | | | | |
| Pineöl | - | 24,80 | - | 11,25 | - | - |
| Orangenterpene | 12,00 | - | 19,80 | 10,00 | 50,00 | - |
| Glykolether | - | - | - | - | - | 70,00 |
| Silberneodecanoat 38% | 57,90 | 40,00 | 40,00 | 60,00 | 47,00 | 27,00 |
| Kollophonium - PO 2:1 | 21,00 | 28,00 | - | - | - | - |
| Bakelite LA751 | - | - | 33,00 | - | - | - |
| Kolophonium | - | - | - | 9,00 | - | - |
| Rhodium(III)Lösung, 5% | 2,60 | 2,00 | 2,00 | 3,5 | - | - |
| Carbonsäure | 0,50 | 0,50 | - | 1,00 | 3,00 | 3,00 |
| HF8028 DS | 0,20 | 0,20 | 0,20 | 0,25 | - | - |
| HAN 8572 | 5,80 | 4,50 | 5,00 | 5,00 | - | - |
| Komponente | | | | | | |
| Substrat | Floatglas | Floatglas | Floatglas | Floatglas | Polyimid Folie | Polyimid Folie |
| Konditionierung des Substrats vor Einsatz | Vorreinigung mit VE Wasser, anschließende Reinigung mit einem Ethanol getränktem, fusselfreien Tuch | Vorreinigung mit VE Wasser, anschließende Reinigung mit einem Ethanol getränktem, fusselfreien Tuch | Vorreinigung mit VE Wasser, anschließende Reinigung mit einem Ethanol getränktem, fusselfreien Tuch | Vorreinigung mit VE Wasser, anschließende Reinigung mit einem Ethanol getränktem, fusselfreien Tuch | Reinigung mit VE Wasser, fusselfreies Tuch | Reinigung mit VE Wasser, fusselfreies Tuch |
| Glanz (GU) | ++ | + | + | +++ | +++ | + |
| Leitfähigkeit (L) | + | + | + | + | +++ | + |
| Lagerfähigkeit | + | + | o | + | + | - |

| | | | | | | |
|---|---|---|---|---|---|---|
| Glanz: + = 1000 - 1300 GU; ++ = >1300 bis 1500 GU; +++ = > 1500 GU. Leitfähigkeit: + = <20%, ++ = 20 - <40%; +++ = ≥ 40%, jeweils bezogen auf die Leitfähigkeit von Silber bei 20 °C. Lagerfähigkeit: + = hervorragend (> 12 Wochen); o = ausreichend (4-12 Wochen); - = unzureichend (< 4 Wochen). | | | | | | |

Die Zusammensetzungen Nr. I - II sowie Nr. IV - V sind erfindungsgemäß.

Die Zusammensetzungen Nr. III und VI ist ein Vergleichsbeispiel.

Ag Versatic 38% ist ein Silberneodecanoat mit 38 Gew.-% Silberanteil, bezogen auf die Gesamtmenge der Zusammensetzung. VE-Wasser bedeutet vollentsalztes Wasser. Dieses weist eine Leitfähigkeit im Bereich von 0 bis 50 µS auf.

Orangenterpene (CAS: 68647-72-3) enthält ca. 95% D-Limonen und wird bei der Fa. Frey & Lau GmbH in Henstedt - Ulzburg bezogen.

Versatic® Carbonsäure sind Tertiäre Carbonsäuren und werden unter anderem von der Fa. HEXION Rotterdam Niederlande bezogen.

Kolophonium (CAS: 8050-09-7) ist ein Gemisch aus verschiedenen Harzsäuren und wird bei der Fa. H. Reynaud & Fils (Deutschland) GmbH, Hamburg bezogen.

Rh(III)-Lösung ist ein Rhodium Nonanoat welches im Hause Heraeus Deutschland GmbH, Hanau hergestellt wird. Vorliegend wird eine Lösung mit 5 Gew.-% Rhodium, bezogen auf das Gesamtgewicht der Lösung, eingesetzt.

HF8028DS ist ein silikonhaltiges Additiv, welches im Hause Heraeus Deutschland GmbH, Hanau hergestellt wird.

HAN8572 ist ein aromatisch-aliphatisches Kohlenwasserstoffgemisch und erhältlich von EXXON MOBIL CHEMICAL, Antwerpen.

### Herstellen eines beschichteten Gegenstands

Als Substrat wurden Prüfkörper der Abmessungen BxHxT von 10 cm x 0,2 cm x 0.8 cm aus Glas ausgewählt. Die Prüfkörper wurden mit mit VE Wasser und Ethanol gereinigt. Mittels Siebdruck wurde eine Schicht einer silberhaltigen Zusammensetzung (siehe oben, Typ I- IV) mit einer Nassfilmdicke von > 20 µm aufgebracht. Die Schicht wurde auf dem Substrat in einem Ofen für 10 Minuten bei einer Temperatur von >350 °C gesintert.

Als Substrat wurden Prüfkörper der Abmessungen BxHxT von 10 cm x 0,1 mm x 10 cm aus Polyimid Folie ausgewählt. Die Prüfkörper wurden mit mit VE Wasser und einem fusselfreien Tuch gereinigt. Mittels Inkjetdruck wurde eine Schicht einer silberhaltigen Zusammensetzung (siehe oben, Typ V und VI) mit einer Nassfilmdicke von > 5 µm aufgebracht. Die Schicht wurde auf dem Substrat in einem Ofen für 10 Minuten bei einer Temperatur von 230 °C gesintert.

## Patentansprüche

1. Eine Zusammensetzung beinhaltend mindestens die Komponenten
a) Silbercarboxylat; und
b) ein Terpen,
wobei die Zusammensetzung als weitere Komponente mindestens eine Carbonsäure, besonders bevorzugt eine tertiäre Carbonsäure, beinhaltet.

2. Die Zusammensetzung nach Anspruch 1, wobei das Terpen ausgewählt ist aus der Gruppe bestehend aus Orangenterpen, Limonen, und Pinen, oder einer Kombination davon.

3. Die Zusammensetzung nach einem der vorherigen Ansprüche, wobei der Gesamtgewichtsanteil an Komponenten beinhaltend eines oder mehrerer der Elemente ausgewählt aus der Gruppe bestehend aus Gold, Rhodium, Vanadium, Palladium, Platin, Osmium und Wolfram weniger als 10 Gew.-%, bezogen auf das Gesamtgewicht der Zusammensetzung beträgt.

4. Die Zusammensetzung nach einem der vorherigen Ansprüche, wobei die Summe der Gewichtsanteile a) und b) in einem Bereich von 20 bis 95 Gew.-%, bezogen auf das Gesamtgewicht der Zusammensetzung beträgt.

5. Die Zusammensetzung einem der vorherigen Ansprüche, wobei das Silbercarboxylat Silberneodecanoat ist.

6. Die Zusammensetzung nach einem der vorherigen Ansprüche, wobei die Zusammensetzung mindestens eine der folgenden weiteren Komponenten aufweist:
i) Organisches Lösemittel;
ii) Haftvermittler;
iii) Viskositätshilfsmittel;
iv) Additiv;
oder eine Kombination von zwei oder mehr davon.

7. Eine Tinte für den Tintenstrahldruck, wobei die Tinte eine Zusammensetzung nach einem der Ansprüche 1 bis 6 beinhaltet.

8. Eine Paste zum Drucken in einem Siebdruckverfahren, wobei die Paste eine Zusammensetzung nach einem der Ansprüche 1 bis 6 beinhaltet.

9. Ein Verfahren zum Herstellen einer Zusammensetzung gemäß einem der Ansprüche 1 bis 6, beinhaltend folgende Schritte:
(I) Bereitstellen des Terpens;
(II) Bereitstellen des Silbercarboxylats;
(III) Gegebenenfalls Bereitstellen mindestens einer weiteren Komponente;
(IV) Mischen der in Schritt (I) bis (III) bereitgestellten Komponenten.

10. Ein Drucker mindestens beinhaltend einen Druckkopf und ein Reservoir, wobei das Reservoir eine Zusammensetzung nach einem der Ansprüche 1 bis 6, oder eine Tinte gemäß Anspruch 7, oder eine Paste gemäß Anspruch 8 beinhaltet.

## Claims

1. A composition comprising at least the components
a) silver carboxylate; and
b) a terpene,
wherein the composition comprises as a further component at least one carboxylic acid, particularly preferably a tertiary carboxylic acid.

2. The composition of claim 1, wherein the terpene is selected from the group consisting of orange terpenes, limonene, and pinene, or a combination thereof.

3. The composition according to any of the preceding claims, wherein the total weight proportion of components comprising one or more of the elements selected from the group consisting of gold, rhodium, vanadium, palladium, platinum, osmium, and tungsten is less than 10 wt.% relative to the total weight of the composition.

4. The composition according to any of the preceding claims, wherein the sum of the weight proportions a) and b) is in a range of 20 to 95 wt.% relative to the total weight of the composition.

5. The composition any of the preceding claims, wherein the silver carboxylate is silver neodecanoate.

6. The composition according to any of the preceding claims, wherein the composition has at least one of the following further components:
i) organic solvent;
ii) adhesion promoter;
iii) viscosity aid;
iv) additive;
or a combination of two or more thereof.

7. An ink for inkjet printing, wherein the ink comprises a composition according to any of claims 1 to 6.

8. A paste for printing in a screen printing process, wherein the paste comprises a composition according to any of claims 1 to 6.

9. A method for producing a composition according to any of claims 1 to 6, comprising the following steps:
(I) providing the terpene;
(II) providing the silver carboxylate;
(III) optionally providing at least one further component;
(IV) mixing the components provided in steps (I) through (III).

10. A printer at least comprising a print head and a reservoir, wherein the reservoir contains a composition according to any of claims 1 to 6, or an ink according to claim 7, or a paste according to claim 8.

## Revendications

1. Formulation contenant au moins les composants
a) carboxylate d'argent ; et
b) un terpène,
la formulation contenant comme autre composant au moins un acide carboxylique, de façon particulièrement préférée un acide carboxylique tertiaire.

2. Formulation selon la revendication 1, le terpène étant choisi dans le groupe constitué de terpène d'orange, de limonène et de pinène ou d'une combinaison de ceux-ci.

3. Formulation selon l'une quelconque des revendications précédentes, la fraction pondérale totale de composants comportant un ou plusieurs des éléments choisis dans le groupe constitué d'or, de rhodium, de vanadium, de palladium, de platine, d'osmium et de tungstène étant inférieure à 10 % en poids sur la base du poids total de la formulation.

4. Formulation selon l'une quelconque des revendications précédentes, la somme des fractions pondérales a) et b) étant située dans la plage de 20 à 95 % en poids sur la base du poids total de la formulation.

5. Formulation selon l'une quelconque des revendications précédentes, le carboxylate d'argent étant le néodécanoate d'argent.

6. Formulation selon l'une quelconque des revendications précédentes, la formulation présentant au moins l'un des autres composants suivants :
i) solvant organique ;
ii) promoteur d'adhérence ;
iii) agent auxiliaire de viscosité ;
iv) additif ;
ou une combinaison de deux ou plus de ceux-ci.

7. Encre pour l'impression par jet d'encre, l'encre contenant une formulation selon l'une quelconque des revendications 1 à 6.

8. Pâte pour imprimer dans un procédé de sérigraphie, la pâte contenant une formulation selon l'une quelconque des revendications 1 à 6.

9. Procédé pour la préparation d'une formulation selon l'une quelconque des revendications 1 à 6, comportant les étapes suivantes :
(I) fourniture du terpène ;
(II) fourniture du carboxylate d'argent ;
(III) le cas échéant, fourniture d'au moins un autre composant ;
(IV) mélange des composants fournis dans les étapes (I) à (III).

10. Imprimante contenant au moins une tête d'impression et un réservoir, le réservoir contenant une formulation selon l'une quelconque des revendications 1 à 6 ou une encre selon la revendication 7 ou une pâte selon la revendication 8.
